# EUROPÄISCHE PATENTSCHRIFT

(11) **EP 2 723 993 B1**
(45) Veröffentlichungstag und Bekanntmachung des Hinweises auf die Patenterteilung: **24.06.2015**
(21) Anmeldenummer: 12745808.1
(22) Anmeldetag: 25.07.2012
(51) Int. Cl.: F01D 19/00, F02C 3/20, F02C 3/22, F02C 3/24, F02C 3/26, F02C 7/228, F02C 7/26

(54) **VERFAHREN ZUM HOCHFAHREN EINER STATIONÄREN GASTURBINE**
METHOD FOR STARTING A STATIONARY GAS TURBINE
PROCÉDÉ DE DÉMARRAGE D'UNE TURBINE À GAZ STATIONNAIRE

(30) Priorität: 26.07.2011 EP 11175342
(43) Veröffentlichungstag der Anmeldung: 30.04.2014
(73) Patentinhaber: Siemens Aktiengesellschaft, 80333 München (DE)
(72) Erfinder: DEUKER, Eberhard, 45481 Mülheim an der Ruhr (DE); KÖSTLIN, Berthold, 47057 Duisburg (DE); MEISL, Jürgen, 45478 Mülheim an der Ruhr (DE); NEHLSEN, Dennis, 46562 Voerde (DE); SCHILDMACHER, Kai-Uwe, 45481 Mülheim a.d. Ruhr (DE)
(86) Internationale Anmeldenummer: PCT/EP2012/064564
(87) Internationale Veröffentlichungsnummer: WO 2013/014176

(56) Entgegenhaltungen:
- EP-A1- 1 944 547
- EP-A2- 1 008 737
- EP-A2- 1 655 456
- WO-A1-2006/053866
- DE-A1- 19 549 140

## Beschreibung

Die Erfindung betrifft ein Verfahren zum Hochfahren einer stationären Gasturbine mit zumindest einer Brennkammer, deren Brenner einen Pilotbrenner und einen Hauptbrenner umfassen und durch die unterschiedliche Brennstoffe in die Brennkammer zur Verbrennung eingebracht werden, wobei während des Beschleunigens eines Rotors der Gasturbine aus dem Stand bis auf eine Nenndrehzahl die Schritte durchgeführt werden:
- Zuführen von Brennstoff einer ersten Brennstoffart zu den Pilotbrennern und
- Zuführen von Brennstoff der ersten Brennstoffart zu den Hauptbrennern.

Stationäre Gasturbinen und Verfahren zum Betrieb der Gasturbinen sind aus dem verfügbaren Stand der Technik in umfangreicher Art und Weise bekannt. Gasturbinen moderner Bauart, welche zur Erzeugung elektrischer Energie eingesetzt werden, weisen in der Regel einen axial durchströmbaren Verdichter, eine oder mehrere Brennkammern und eine Turbineneinheit auf. Im Betrieb wird ein der Brennkammer zugeführter Brennstoff mit Hilfe der vom Verdichter verdichteten Umgebungsluft zu einem Heißgas verbrannt, welches sich in der Turbineneinheit an dem Rotor der Gasturbine arbeitsleistend entspannt. Der Rotor treibt dann einen Generator an, welcher die mechanische Energie in elektrische Energie verlustarm umwandelt und in ein Stromverteilungsnetz einspeist.

Beim Starten der Gasturbine - dem so genannten Anfahren oder Hochfahren - wird dessen Rotor mit Hilfe einer Antriebsvorrichtung auf eine Zünddrehzahl gebracht, wonach durch Einspeisen eines Pilot-Brennstoffstroms in die Brennkammer dieser gezündet wird. Anschließend zündet die Pilotflamme einen Haupt-Brennstoffstrom, welcher über separate Brenner und/oder Brennstoffdüsen auch in die Brennkammer(n) einspritzt wird. Gemäß dem Buch "Stationäre Gasturbinen" von Christoph Lechner und Jörg Seume (Herausgeber) wird die Antriebsvorrichtung bei einer Drehzahl von 50% bis 80% der Nenndrehzahl vom Rotor entkoppelt. Der Rotor wird dann nur noch von dem bei der Verbrennung entstehenden Heißgas beschleunigt. Mit Erreichen der Nenndrehzahl, zumeist 3000 min⁻¹ oder 3600 min⁻¹, endet der Startvorgang der Gasturbine. Anschließend kann der Generator mit der Netzfrequenz des Stromverteilungsnetzes synchronisiert und diesem aufgeschaltet werden.

Die Zuführung von Pilot-Brennstoff und Haupt-Brennstoff zu den entsprechenden Brennern bzw. Düsen erfolgt über getrennt arbeitende Leitungssysteme mit darin angeordneten Ventilen, mit denen sich das Volumen des jeweilig zugeführten Brennstoffs und dessen Druck einstellen lässt.

Als Brennstoff werden sowohl flüssige als auch gasförmige Brennstoffe verwendet. Zur Erzeugung einer besonders effizienten und emissionsarmen Verbrennung in der Brennkammer ist es bekannt, die Verbrennung des Haupt-Brennstoffmassenstroms durch die Pilotflamme stetig zu unterstützen. Als Pilotbrennstoff wird häufig ein Brenngas, beispielsweise Erdgas verwendet.

Aufgrund der zur Erzeugung von großen Mengen an elektrischer Energie erforderlichen großen Mengen an gasförmigem Brennstoff sind die Brennstoffleitungssysteme der Gasturbine häufig an ein Brennstoffnetz angeschlossen, aus welchem dauerhaft der Brennstoff in der benötigten Menge über einen längeren Zeitraum entnommen werden kann. Ggf. ist zwischen dem Brennstoffnetz und dem Brennstoffleitungssystem noch ein zusätzlicher Gaskompressor geschaltet, um den Versorgungsdruck des Brennstoffnetzes zuverlässig auf ein höheres Maß anzuheben, mit dem ein sicherer Betrieb der Gasturbine gewährleistet werden kann. Der erforderliche Brennstoffdruck beim Einspeisen in die Brennkammer liegt dabei oberhalb des vom Verdichter der Gasturbine geleisteten Druckverhältnisses. Folglich wird der Brennstoffdruck so eingestellt, dass Brennstoff in der erforderlichen Menge auch tatsächlich in die Brennkammer einströmt. Der vom Brennstoffnetz bereitzustellenden bzw. vom zusätzlichen Gasverdichter zu liefernde Versorgungsdruck kann sogar weit oberhalb des vom Verdichter geleisteten Druckverhältnisses liegen, da insbesondere beim Beschleunigen des Rotors auf die Nenndrehzahl und bei Lastabwurf sehr große Mengen an Pilotbrennstoff benötigt werden. Pilotbrenner, welche eine vorgemischte Flamme erzeugen - so genannte Vormischpilotbrenner - weisen zudem vergleichsweise kleine Gasaustrittsbohrungen auf, welche eine weitere Erhöhung des ohnehin schon hohen Gasversorgungsdrucks erforderlich machen, um die geforderten Pilotgasmassenströme zu erreichen. Dies steht im Gegensatz zu dem Bedürfnis nach einer effizienten Betriebsmöglichkeit auch bei reduziertem Versorgungsdruck im Brennstoffnetz.

Zudem ist aus der WO 2006/053866 A1 ein Verfahren zum Anfahren einer mit niederkalorischem Gas betriebenen Gasturbine bekannt. Als niederkalorisches Gas wird Synthesegas in die Brennkammer der Gasturbine über eine Pilotbrenner und einen Hauptbrenner eingespritzt. Um trotz eines vergleichsweise geringen Brennstoffmassenstroms einen Mindestdruckverlust nicht zu unterschreiten, was zu einer zu geringen Ausströmgeschwindigkeit führen würde, schlägt die WO 2006/053866 A1 vor, ein Inert-Medium dem Synthesegas unterzumischen. Dies hat jedoch den Nachteil, dass weiterhin ein hoher Versorgungsdruck insgesamt erforderlich ist.

Aufgabe der Erfindung ist die Bereitstellung eines Verfahrens, mit dem eine verbesserte Anfahrprozedur der Gasturbine erreicht wird und die aus dem aufgezeigten Stand der Technik sich ergebenden Nachteile vermieden werden.

Die der Erfindung zugrunde liegende Aufgabe wird mit einem Verfahren gemäß den Merkmalen des Anspruchs 1 gelöst. Vorteilhafte Ausgestaltungen und weitere Merkmale sind dabei in den abhängigen Ansprüchen angegeben.

Der Erfindung liegt die Erkenntnis zugrunde, dass während des Hochfahrens bereits ein Mischbetrieb zweier unterschiedlicher Brennstoffarten möglich ist, um die zur Beschleunigung des Rotors erforderliche thermisch Energie bereitzustellen. Bisher wurde beim Stand der Technik währenddessen lediglich eine Brennstoffart, zumeist nur Erdgas oder nur Heizöl, verwendet. Die Erfindung wendet sich somit von der bisherigen Vorgehensweise ab und schlägt vor, dass vor dem Erreichen der Nenndrehzahl zumindest einem Brenner Brennstoff einer zweiten Brennstoffart zugeführt wird.

Diese Vorgehensweise ist insbesondere für Gasturbinen von Vorteil, bei denen ein gasförmiger Brennstoff, zumeist Erdgas, und ein flüssiger Brennstoff, zumeist Heizöl, eingesetzt wird. Insbesondere in diesem Fall kann die ansonsten vergleichsweise hohe Menge an Brennstoff der ersten Brennstoffart für den Pilotbrenner kurzfristig während der Startphase teilweise durch Brennstoff einer zweiten Brennstoffart substituiert werden. Zur Substitution eignen sich insbesondere hochkalorische Brennstoffe. Mit Hilfe dieses Mischbetriebs können beispielsweise Verbrennungsschwingungen reduziert werden, was den Betrieb der Gasturbine verbessert. Vorzugsweise wird dabei der Brennstoff der zweiten Brennstoffart entsprechend ausgebildeten Pilotbrennern zugeführt, wodurch die Brennstoffmenge der ersten Brennstoffart zu den Pilotbrennern anfänglich reduziert werden kann. Die Brenner umfassen dann folglich einen zweistufigen Pilotbrenner. Prinzipiell kann der Brennstoff der zweiten Brennstoffart entweder vor oder nach der Aktivierung der Zuführung von Brennstoff der ersten Brennstoffart zu den Hauptbrennern während des Anfahrens den Brennern zugeführt werden.

Vorzugsweise erfolgt die Aktivierung der Zuführung von Brennstoff der zweiten Brennstoffart zu den Brennern jedoch erst nachdem der Brennstoff der ersten Brennstoffart zu den Hauptbrennern zugeführt wurde. In diesem Fall kann eine besonders zuverlässige Verbrennung der in die Brennkammer eingebrachten Brennstoffe erreicht werden. Dabei sind die Hauptbrenner vorzugsweise als Vormischbrenner ausgestaltet, was eine emissionsarme Verbrennung des Brennstoffs ermöglicht.

Die Menge von Brennstoff der zweiten Brennstoffart wird anfänglich erhöht, während die Brennstoffmenge von Brennstoff der ersten Brennstoffart reduziert wird. Dies soll eine unzulässig hohe Beschleunigung des Rotors verhindern. Dabei soll nur eine derartige Menge an Brennstoff der ersten Brennstoffart eingespeist werden, die durch den ohnehin vorhandenen Versorgungsdruck in der Brennstoffleitung - also ohne Zusatzverdichter - möglich wäre. Prinzipiell wird jedoch während der Beschleunigung des Rotors auf Nenndrehzahl hauptsächlich Brennstoff der ersten Brennstoffart verbrannt. Die Menge an Brennstoff der zweiten Brennstoffart ist während des Hochfahrens der Gasturbine vergleichsweise gering.

Besonders bevorzugt ist die Ausgestaltung, bei der die erste Brennstoffart gasförmig und die zweite Brennstoffart flüssig ist. In diesem Fall wird beim Gasturbinenstart mit Erdgas ein geringer Teil der Pilotgasmenge durch eine Pilot-Ölmenge ersetzt, wodurch die für den Hochfahrprozess erforderliche Pilotgasmenge insgesamt reduziert werden kann. Durch die Reduzierung der Pilotgasmenge kann auch der maximale Versorgungsdruck im Erdgasversorgungsnetz geringer sein als bisher, was zusätzliche Konstruktionselemente im Erdgasversorgungssystem zur Druckerhöhung erspart.

Weitere Vorteile und Merkmale der Erfindung werden in einem nachfolgenden Ausführungsbeispiel anhand einer Zeichnung näher erläutert. Dabei zeigen:
- FIG 1: den schematischen Aufbau einer Gasturbine und
- FIG 2: ein Rotordrehzahl/Brennstoffmengen-Zeit-Diagramm des Anfahrprozesses zum Beschleunigen des Rotors der Gasturbine aus dem Stillstand bis auf Nenndrehzahl.

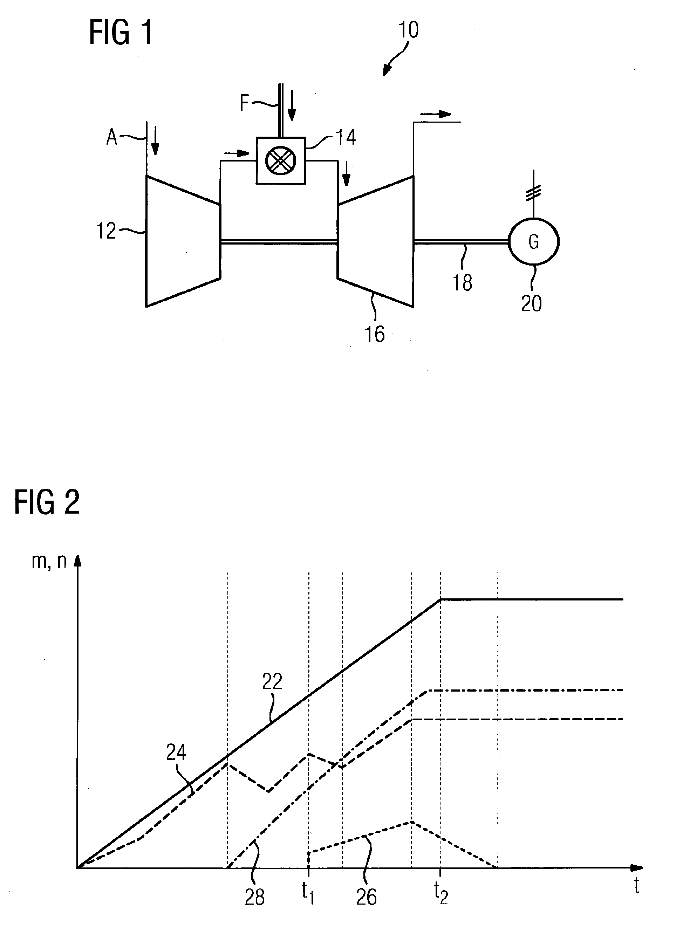

FIG 1 zeigt schematisch den Aufbau einer stationären Gasturbine 10 mit einem Verdichter 12, einer Brennkammer 14 und einer Turbine 16 sowie einen an einem Rotor 18 der Gasturbine 10 angekoppelten Generator 20. Üblicherweise sind sowohl der Verdichter 12 als auch die Turbine 16 als axial durchströmbare Turbomaschinen ausgeführt. Die Brennkammer 14 kann sowohl als eine Ringbrennkammer, als zwei Silo-Brennkammern oder auch als mehrere um den Umfang der Maschinenachse gleichmäßig verteilte Rohrbrennkammern ausgebildet sein. In jeder Brennkammer 14 ist zumindest ein Brenner zum Zuführen von Brennstoff F in die Brennkammer vorgesehen. Es können auch mehrere Brenner je Brennkammer vorgesehen sein. Jeder Brenner umfasst zumindest einen Pilotbrenner und zumindest zwei Hauptbrenner für zwei unterschiedliche Brennstoffarten. Derartige Brenner sind auch als Dual-Fuel-Brenner bekannt.

Zum Anfahren der Gasturbine 10 wird der Rotor 18 der Gasturbine 10 über eine nicht weiter dargestellte Drehvorrichtung aus dem Stand beschleunigt. Mit Drehung des Rotors 18 saugt der Verdichter 12 Umgebungsluft an und pumpt diese in die Brennkammer 14. Bereits bei geringer Drehzahl wird der Brennkammer 14 über die Pilotbrenner der Gasturbine 10 Brennstoff F zugeführt und gezündet. Anschließend verbrennen der Pilotbrennstoff und die verdichtete Luft in der Brennkammer 14 bzw. in den Brennkammern zu einem Heißgas, welches sich in der Turbine 16 an den darin angeordneten Turbinenschaufeln arbeitsleistend entspannt. Das entspannte Rauchgas wird dann über einen Kamin ab- oder einem Abhitzedampferzeuger zugeführt.

Das Verfahren zum Hochfahren des Rotors einer Gasturbine aus dem Stillstand bis zur Nenndrehzahl ohne Belastung (auch Full Speed No Load, FSNL genannt) ist in dem in FIG 2 dargestellten Diagramm gezeigt. Im Diagramm ist sowohl der Brennstoffmassenstrom m als auch die Rotordrehzahl n über die Zeit t dargestellt.

Eine erste Kennlinie 22 zeigt die Rotordrehzahl n über die Zeit t. Eine zweite Kennlinie 24 zeigt den Massenstrom m des den Pilotbrennern insgesamt zugeführten Brennstoffs der ersten Brennstoffart. Eine dritte Kennlinie 26 zeigt den Massenstrom des den Pilotbrennern zugeführten Brennstoffs der zweiten Brennstoffart. Eine vierte Kennlinie 28 zeigt den Massenstrom des den Hauptbrennern zugeführten Brennstoffs der ersten Brennstoffart.

Das Verfahren zum Starten, d.h. Hochfahren der stationären Gasturbine 2 wird nachfolgend anhand des in FIG 2 dargestellten Diagramms näher erläutert, wobei die erste Brennstoffart gasförmig und somit beispielsweise Erdgas sein kann und die zweite Brennstoffart flüssig und somit beispielsweise Öl sein kann.

Nach der Beschleunigung des Rotors 18 aus dem Stand wird den Pilotbrennern mit zunehmender Menge Brennstoff der ersten Brennstoffart zugeführt. Dies ist aus der Kennlinie 24 ersichtlich. Mit dem Zuführen der ersten Brennstoffart - Erdgas - zu den Hauptbrennern, kann für eine kurze Zeitdauer die Pilotgasmenge an Erdgas erstmal reduziert werden, wonach dann wieder die Pilotgasmenge vergrößert wird. Zum Zeitpunkt t1 wird eine Brennstoffmenge einer zweiten Brennstoffart - nämlich Öl - in die Brennkammer 14 eingebracht und dort verbrannt. Gleichzeitig wird die Brennstoffmenge der ersten Brennstoffart zu den Pilotbrennern geringfügig reduziert. Mithin wird ein Teil der Pilotgasmenge durch eine Pilotölmenge ersetzt. Damit läuft nun eine Mischverbrennung ab, bei der Brennstoffe unterschiedlicher Arten gleichzeitig zu dem Heißgas verbrannt werden.

Anschließend erfolgt die weitere Beschleunigung des Rotors durch die Erhöhung der thermischen Energie. Dazu wird gleichzeitig die eingebrachte Ölmenge und die über den Hauptbrennern zugeführte Brennstoffmenge an Brennstoff der ersten Brennstoffart stetig erhöht. Mit Erreichen der Nenndrehzahl zum Zeitpunkt t2 ist der Startprozess der Gasturbine 10 abgeschlossen. Danach kann die über die Ölpilotbrenner zugeführte Menge an Brennstoff der zweiten Brennstoffart auf Null reduziert werden, wodurch der Mischbetrieb erstmal beendet ist.

Insgesamt betrifft die Erfindung ein Verfahren zum Hochfahren einer stationären Gasturbine 10 mit zumindest einer Brennkammer 14, deren Brenner einen Pilotbrenner und einen Hauptbrenner umfassen und durch die unterschiedliche Brennstoffarten in die Brennkammer 14 zur Verbrennung eingebracht werden, wobei während des Beschleunigens eines Rotors 18 der Gasturbine 10 aus dem Stand bis auf eine Nenndrehzahl die Schritte durchgeführt werden:
- Zuführen von Brennstoff einer ersten Brennstoffart zu den Pilotbrennern und
- Zuführen von Brennstoff der ersten Brennstoffart zu den Hauptbrennern.

Um ein Verfahren bereitzustellen, bei dem ein vergleichsweise geringer Versorgungsdruck im Brennstoffversorgungssystem erforderlich ist und bei dem während des Hochfahrens maschinengefährdende Verbrennungsschwingungen vermieden werden, wird vorgeschlagen, dass vor dem Erreichen der Nenndrehzahl dem Brenner Brennstoff einer zweiten Brennstoffart zugeführt wird.

## Patentansprüche

1. Verfahren zum Hochfahren einer stationären Gasturbine (10) mit zumindest einer Brennkammer (14), deren Brenner einen Pilotbrenner und einen Hauptbrenner umfassen und durch die unterschiedliche Brennstoffarten in die Brennkammer (14) zur Verbrennung eingebracht werden,
wobei während des Beschleunigen eines Rotors (18) der Gasturbine (10) aus dem Stand bis auf eine Nenndrehzahl die Schritte durchgeführt werden:
- Zuführen von Brennstoff einer ersten Brennstoffart zu den Pilotbrennern und
- Zuführen von Brennstoff der ersten Brennstoffart zu den Hauptbrennern,
**dadurch gekennzeichnet,**
**dass** vor dem Erreichen der Nenndrehzahl zumindest einem Brenner Brennstoff einer zweiten Brennstoffart zugeführt wird.

2. Verfahren nach Anspruch 1,
bei dem der Brennstoff der zweiten Brennstoffart den Pilotbrennern zugeführt wird.

3. Verfahren nach Anspruch 1 oder 2,
bei dem erst nach dem Zuführen von Brennstoff der ersten Brennstoffsart zu den Hauptbrennern die Zufuhr von Brennstoff der zweiten Brennstoffart erfolgt.

4. Verfahren nach Anspruch 1, 2 oder 3,
bei dem mit der Zufuhr von Brennstoff der zweiten Brennstoffart die dem Pilotbrenner zugeführte Brennstoffmenge der ersten Brennstoffart anfänglich verringert wird.

5. Verfahren nach einem der Ansprüche 1 bis 4,
bei dem die eine der beiden Brennstoffarten, vorzugsweise die erste Brennstoffart, gasförmig und die andere der beiden Brennstoffarten, vorzugsweise die zweite Brennstoffart, flüssig ist.

## Claims

1. Method for running up a stationary gas turbine (10) having at least one combustion chamber (14), the burners of which comprise a pilot burner and a main burner and by which different fuel types are introduced into the combustion chamber (14) for combustion, the steps:
- delivery of fuel of a first fuel type to the pilot burners and
- delivery of fuel of the first fuel type to the main burners
being carried out during the acceleration of a rotor (18) of the gas turbine (10) from standstill up to a nominal rotational speed, **characterized in that** fuel of a second fuel type is delivered to at least one burner before the nominal rotational speed is reached.

2. Method according to Claim 1, in which the fuel of the second fuel type is delivered to the pilot burners.

3. Method according to Claim 1 or 2, in which the delivery of fuel of the second fuel type takes place only after the delivery of fuel of the first fuel type to the main burners.

4. Method according to Claim 1, 2 or 3, in which, with the delivery of fuel of the second fuel type, the fuel quantity of the first fuel type delivered to the pilot burner is initially reduced.

5. Method according to one of Claims 1 to 4, in which one of the two fuel types, preferably the first fuel type, is gaseous and the other of the two fuel types, preferably the second fuel type, is liquid.

## Revendications

1. Procédé de démarrage d'une turbine à gaz (10) industrielle, comprenant au moins une chambre de combustion (14), dont le brûleur comprend un brûleur pilote et un brûleur principal et par lesquels des types de combustible différents sont introduits dans la chambre de combustion (14) pour la combustion,
dans lequel pendant l'accélération d'un rotor (18) de la turbine (10) à gaz, on effectue du repos jusqu'à un nombre de tour nominal les stades :
- apport de combustible d'un premier type aux brûleurs pilotes et
- apport de combustible du premier type aux brûleurs principaux,
**caractérisé**
**en ce qu'**avant d'atteindre le nombre de tour nominal on apporte du combustible d'un deuxième type à au moins un brûleur.

2. Procédé suivant la revendication 1,
dans lequel on apporte le combustible du deuxième type aux brûleurs pilotes.

3. Procédé suivant la revendication 1 ou 2,
dans lequel, seulement après l'apport de combustible du premier type aux brûleurs principaux, on effectue l'apport de combustible du deuxième type.

4. Procédé suivant la revendication 1, 2 ou 3,
dans lequel, avec l'apport de combustible du deuxième type, on diminue au début la quantité de combustible du premier type apporté au brûleur pilote.

5. Procédé suivant l'une des revendications 1 à 4,
dans lequel l'un des deux types de combustible, de préférence le premier type de combustible, est gazeux et l'autre des deux types de combustible, de préférence le deuxième type de combustible, est liquide.
